# FASCICULE DE BREVET EUROPEEN

(11) **EP 3 071 938 B1**
(45) Date de publication et mention de la délivrance du brevet: **03.01.2018**
(21) Numéro de dépôt: 14799404.0
(22) Date de dépôt: 14.11.2014
(51) Int. Cl.: G01H 9/00

(54) **CAPTEUR À FIBRE OPTIQUE GRANDE SENSIBILITÉ**
SENSOR MIT HOCHEMPFINDLICHER GLASFASER
SENSOR WITH HIGH-SENSITIVITY OPTICAL FIBRE

(30) Priorité: 18.11.2013 FR 1302640
(43) Date de publication de la demande: 28.09.2016
(73) Titulaire: THALES, 92400 Courbevoie (FR); Centre National de la Recherche Scientifique, 75016 Paris (FR)
(72) Inventeur: BORTOLOZZO, Umberto, 06160 Juan-les-Pins (FR); HUIGNARD, Jean-Pierre, F-75013 Paris (FR); RESIDORI, Stefania, F-06160 Juan-les-Pins (FR); MOLIN, Stéphanie, F-91210 Draveil (FR); DOLFI, Daniel, F-91400 Orsay (FR)
(74) Mandataire: Joubert, Cécile
(86) Numéro de dépôt international: PCT/EP2014/074561
(87) Numéro de publication internationale: WO 2015/071392

(56) Documents cités:
- US-A- 4 536 861
- US-A- 5 694 216
- US-A1- 2011 320 147
- US-A1- 2012 226 452
- R. BOUFFARON ET AL: "All-optical acoustic array for underwater surveillance", PROCEEDINGS OF SPIE, vol. 8794, 20 mai 2013 (2013-05-20), page 87940N, XP055133779, ISSN: 0277-786X, DOI: 10.1117/12.2025798 cité dans la demande

## Description

### DOMAINE DE L'INVENTION

La présente invention concerne le domaine des capteurs à fibre optiques. Plus précisément, l'invention concerne des capteurs aptes à détecter une excitation à proximité de la fibre et à localiser cette excitation le long de la fibre en environnement bruité.

### ETAT DE LA TECHNIQUE

Des capteurs à fibre optique quasi distribués sont connus de l'état de la technique par exemple pour la détection sous marine d'ondes acoustiques (surveillance des côtes, contrôle de l'activité sismique...) ou la détection de variation de pression dans l'air.
Ces capteurs sont largement utilisés pour leur compacité et leur sensibilité.
Les plus sensibles sont basés sur des réseaux de Bragg actifs (lasers) couplés à un transducteur mécanique qui convertit la pression radiale de l'onde acoustique en élongation de la fibre, conduisant à une modulation de la longueur d'onde optique en sortie de fibre.
Par exemple le capteur laser à fibre à contre-réaction distribuée (DFB-FL) tel que décrit dans la publication « All optical array for underwater surveillance », European Conférence Workshop on Optical Fiber Sensors EWOFS 2013, Krakow, Poland, Proceeding SPIE Vol. 879487940N-1, comprend une fibre optique dans laquelle une pluralité de réseaux de Bragg ont été enregistrés, réalisant une pluralité de cavités lasers aptes à laser chacune sur une longueur d'onde λi, chaque cavité constituant un capteur. Le principe de fonctionnement du capteur laser à fibre à contre-réaction distribuée est basé sur la déformation axiale de la cavité laser, ce qui module la fréquence du laser. Le signal acoustique déforme axialement le centre sensible de la cavité laser. La déformation a pour effet de moduler la phase optique de la cavité et donc la fréquence de résonance de celle-ci, et sa fréquence optique d'émission. Un autre exemple d'un capteur laser a fibre contre-réaction distribuée est divulgué dans le document US 2011/320147. Le document US 4 536 861 divulgue un capteur interféromètre du type holographique. Une onde acoustique localisée à proximité de la fibre est transformée en élongation, ce qui induit une modulation de la longueur d'onde d'émission du laser situé dans la fibre et à proximité de l'onde acoustique. La lumière issue des lasers est récupérée en sortie de fibre et couplée à un interféromètre, puis injectée dans un démultiplexeur de longueur d'onde pour identifier quel laser a subi le changement de longueur d'onde, et de là déterminer la direction d'arrivée de l'onde acoustique. Ces capteurs sont capables de détecter le picostrain i.e. des variations relatives de ΔL/L∼10⁻¹².
Ces capteurs et systèmes basés sur des réseaux de Bragg sont intrinsèquement sensibles aux variations de l'environnement, typiquement température et pression statique, ce qui pose de fortes contraintes sur leur conception. La structure mécanique dans laquelle est logée la cavité est configurée de sorte que lorsque la température varie, elle subit une déformation entrainant une variation de la longueur de la cavité qui compense celle induite par les variations de pression statique. La structure mécanique présente, de plus, plusieurs orifices pour l'équilibrage des pressions statiques, permettant d'éviter un filtre hydrostatique volumineux.

De plus, des mesures interférométriques précises doivent être effectuées pour transformer la modulation de la fréquence optique en une modulation de phase. La technique utilisée est par exemple du type self-homodyne retardée et nécessite une grande longueur de ligne à retard (fibre optique susceptible d'introduire du bruit de phase sur le signal) et au moins une translation de fréquence (élément acousto-optique ou électro-optique induisant des pertes). Ces mesures nécessitent de plus une boucle de rétro-action pour compenser les variations lentes de longueur de la ligne à retard fibrée et maintenir l'interféromètre dans une zone de fonctionnement linéaire (quadrature) stable et de sensibilité maximale.

Ainsi l'utilisation d'un interféromètre constitue une limitation à la mise en oeuvre pratique des systèmes, en particulier lorsque la détection doit être exécutée dans un environnement fluctuant
Ces capteurs sont également onéreux, car constitués de cavités laser couteuses à fabriquer et à mettre en oeuvre.

### BUT DE L'INVENTION

Le but de l'invention est de réaliser un capteur à fibre optique permettant de localiser une excitation à proximité de la fibre, l'excitation induisant une modulation de phase d'un signal optique se propageant dans la fibre, le capteur présentant une très grande sensibilité et permettant de remédier aux inconvénients précités.

### DESCRIPTION DE L'INVENTION

La présente invention a pour objet un capteur à fibre optique pour localiser une excitation à proximité d'un ensemble fibre optique, l'excitation induisant une modulation de la phase d'un signal optique se propageant dans l'ensemble fibre optique, le capteur comprenant :
- un ensemble laser d'au moins un laser, l'ensemble laser étant configuré pour émettre N faisceaux lasers indicés i avec N > 1, de longueur d'onde d'émission respective λi,
- un ensemble fibre optique comprenant N tronçons successifs indicés i, chaque tronçon comprenant un dispositif de réflexion sélectif d'une longueur d'onde d'émission associée λi, les indices étant repérés par rapport à une extrémité de l'ensemble fibre,
- un système optique configuré pour :
   * injecter par ladite extrémité les faisceaux laser
   * recevoir par l'extrémité N faisceaux signal indicés i respectivement de longueurs d'onde λi, chaque faisceau signal étant issu de la réflexion, sur le dispositif de réflexion associé à la longueur d'onde λi, du faisceau laser de longueur d'onde λi injecté puis se propageant dans l'ensemble fibre,
   *générer N faisceaux de référence indicés i respectivement de longueurs d'onde λi, à partir du faisceau laser de longueur d'onde d'émission λi,
   *réaliser N zones d'interférences indicées i, chaque zone correspondant à l'interférence entre un faisceau de référence et un faisceau signal de même longueur d'onde d'émission λi,
- un détecteur holographique comprenant :
   - une valve optique à cristal liquide comprenant une couche de cristal liquide disposée entre deux substrats, un des substrats comprenant un matériau photoconducteur pour lesdites N longueurs d'onde d'émission, la valve étant disposée de sorte qu'elle recouvre au moins partiellement les zones d'interférences, la valve étant configurée pour réaliser N hologrammes indicés i à partir respectivement des N zones d'interférence,
   - au moins un détecteur optique configuré pour détecter N signaux optiques de sortie indicés i diffractés respectivement par les N hologrammes,
   - une unité de traitement adaptée pour identifier le tronçon de l'ensemble fibre situé à proximité de l'excitation à localiser, à partir des N signaux optiques de sortie détectés.

Préférentiellement, l'unité de traitement est adaptée pour identifier le tronçon en déterminant, parmi les N signaux optiques de sortie détectés, le signal optique de sortie d'indice le plus faible présentant la modulation de phase, le tronçon à identifier correspondant au tronçon présentant l'indice le plus faible.
Préférentiellement, la modulation de phase du signal optique de sortie correspond à une modulation temporelle d'une intensité du signal optique de sortie détectée.

Selon un mode de réalisation le dispositif de réflexion comprend un miroir dichroïque et l'ensemble fibre optique comprend N fibres optiques, chaque fibre et le miroir dichroïque associé correspondant à un tronçon.
Selon un autre mode de réalisation, l'ensemble fibre optique est formé d'une fibre unique et chaque dispositif de réflexion comprend un réflecteur de Bragg intégré dans la fibre.

Selon un mode de réalisation, l'ensemble laser consiste en un laser unique émettant séquentiellement les longueurs d'onde d'émission (λ1, λ2,...λN).

Selon un autre mode de réalisation, l'ensemble laser comprend une pluralité de N lasers, chaque laser émettant respectivement une longueur d'onde d'émission.

Selon un mode de réalisation, le capteur selon l'invention comprend N détecteurs optiques indicés i chaque détecteur étant adapté pour détecter respectivement un signal optique de sortie de longueur d'onde d'émission λi, la détection s'opérant de manière simultanée pour tous les détecteurs. Selon un autre mode de réalisation, le capteur selon l'invention comprend un détecteur optique unique adapté pour détecter séquentiellement les signaux optiques de sortie.

Selon une variante, l'ensemble fibre optique est multimode.
Selon une autre variante, l'ensemble fibre optique est monomode et à maintien de polarisation.

Préférentiellement, l'ensemble fibre optique est immergé et l'excitation à localiser est une onde acoustique sous marine.

Selon un autre aspect, l'invention concerne un procédé de localisation d'une excitation à proximité d'un ensemble fibre optique, l'excitation induisant une modulation de la phase d'un signal optique se propageant dans l'ensemble fibre optique, comprenant les étapes consistant à :
- émettre N faisceaux lasers indicés i avec N >1, de longueur d'onde d'émission respective λi,
- injecter lesdits N faisceaux lasers dans un ensemble fibre optique, par une extrémité de l'ensemble, l'ensemble fibre optique comprenant N tronçons successifs, indicés i chaque tronçon comprenant un dispositif de réflexion sélectif d'une longueur d'onde d'émission associée λi, les indices étant repéré par rapport à l'extrémité de ladite fibre,
- recevoir par l'extrémité N faisceaux signal indicés i respectivement de longueurs d'onde λi, chaque faisceau signal étant issu de la réflexion, sur le moyen de réflexion associé à la longueur d'onde λi, du faisceau laser de longueur d'onde λi injecté puis se propageant dans ledit ensemble fibre,
- générer N faisceaux de référence indicés i respectivement de longueurs d'onde λi, à partir du faisceau laser (Fi) de longueur d'onde d'émission λi,
- réaliser N zones d'interférences indicées i, chaque zone correspondant à l'interférence entre un faisceau de référence et un faisceau signal de même longueur d'onde d'émission λi,
- réaliser N hologrammes indicés i à partir des N zones d'interférence avec une valve optique à cristal liquide comprenant une couche de cristal liquide disposée entre deux substrats, un des substrats comprenant un matériau photoconducteur pour les N longueurs d'onde d'émission (λi), la valve étant disposée de sorte qu'elle recouvre au moins partiellement les zones d'interférences,
- détecter N signaux optiques de sortie indicés i diffractés respectivement par les N hologrammes,
- identifier le tronçon de l'ensemble fibre optique situé à proximité de l'excitation à localiser, à partir des N signaux optiques de sortie détectés.

Préférentiellement l'étape d'identification du procédé selon l'invention comprend une étape consistant à déterminer, parmi les N signaux optiques de sortie détectés, le signal optique de sortie d'indice le plus faible présentant la modulation de phase, le tronçon à identifier correspondant au tronçon présentant l'indice le plus faible.

Préférentiellement, l'étape de détermination du signal optique de sortie d'indice le plus faible présentant la modulation de phase comprend une étape consistant à analyser, pour les N signaux optiques de sortie, respectivement une modulation temporelle de l'intensité détectée.

D'autres caractéristiques, buts et avantages de la présente invention apparaîtront à la lecture de la description détaillée qui va suivre et en regard des dessins annexés donnés à titre d'exemples non limitatifs et sur lesquels :
- La figure 1 illustre un capteur selon l'invention.
- La figure 2 illustre le principe connu d'utilisation d'une valve à cristal liquide pour réaliser un mélange à deux ondes, une des ondes étant temporellement et spatialement complexe.
- La figure 3 illustre la variation de l'intensité détectée en fonction du temps.
- La figure 4 illustre un capteur selon l'invention selon un premier mode de réalisation.
- La figure 5 illustre un exemple de détection lorsqu'aucune excitation n'est présente.
- La figure 6 illustre un exemple de détection lorsque l'excitation est localisée à proximité du premier tronçon de l'ensemble fibre optique du capteur selon l'invention.
- La figure 7 illustre un exemple de détection lorsque l'excitation est localisée à proximité du dernier tronçon de l'ensemble fibre optique du capteur selon l'invention.
- La figure 8 illustre un capteur selon l'invention selon un deuxième mode de réalisation.

### DESCRIPTION DETAILLEE DE L'INVENTION

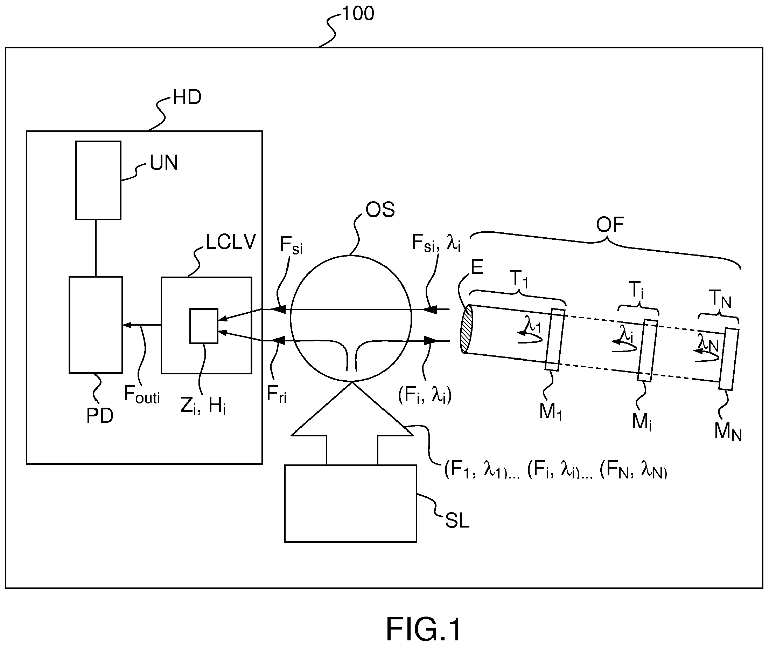

La figure 1 illustre un capteur 100 selon l'invention.
Le capteur 100 est apte à localiser une excitation à proximité d'un ensemble fibre optique OF. L'excitation que le capteur détecte est telle qu'elle induit une modulation de la phase d'amplitude Δφ d'un signal optique se propageant dans l'ensemble fibre optique OF. L'excitation correspond par exemple à une variation de pression, dans l'air (capteur de type microphone) ou dans l'eau (capteur de type hydrophone) typiquement à une fréquence supérieure à quelques Hz.
Le capteur 100 décrit figure 1 comprend un ensemble fibre optique OF structuré comme élément sensible et un détecteur holographique à valve à cristal liquide (Liquid Crystal Light Valve en terminologie anglo-saxonne). Son principe consiste à détecter les variations de phase (dues à une élongation de la fibre provoquée par l'excitation à localiser) d'au moins un mode se propageant dans l'ensemble fibre optique à l'aide d'un détecteur holographique basé sur une valve à cristal liquide. Le capteur comprend également une unité de traitement appliquant un protocole de localisation.

Le capteur 100 selon l'invention comprend un ensemble laser SL d'au moins une source laser, l'ensemble laser SL étant configuré pour émettre N faisceaux lasers Fi indicés i avec N > 1, de longueur d'onde d'émission respective λi. Ainsi l'ensemble laser SL émet une pluralité de faisceaux lasers F1, F2...Fi, ... FN présentant chacun une longueur d'onde d'émission associée λ1, λ2, λi, ..., λN.

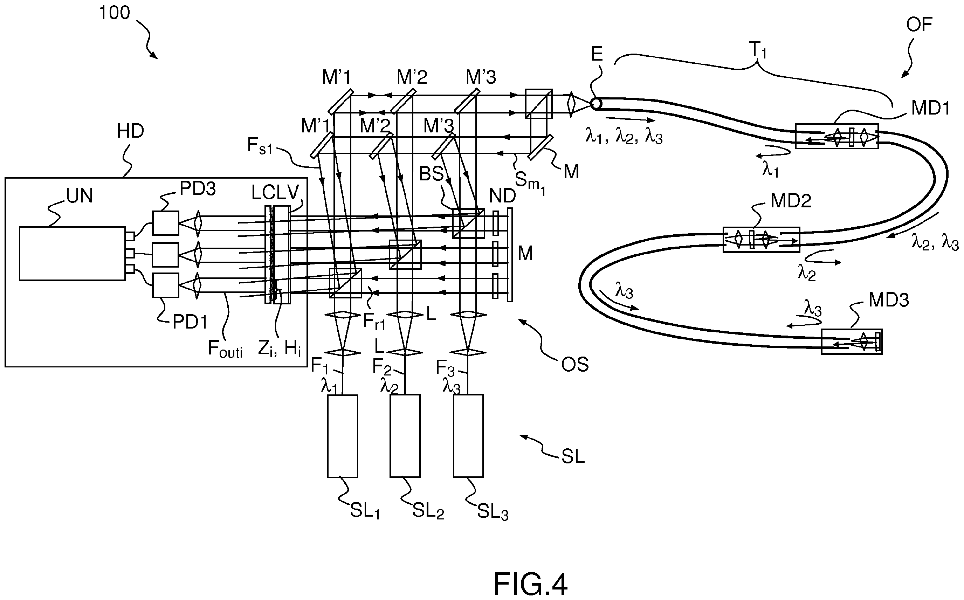

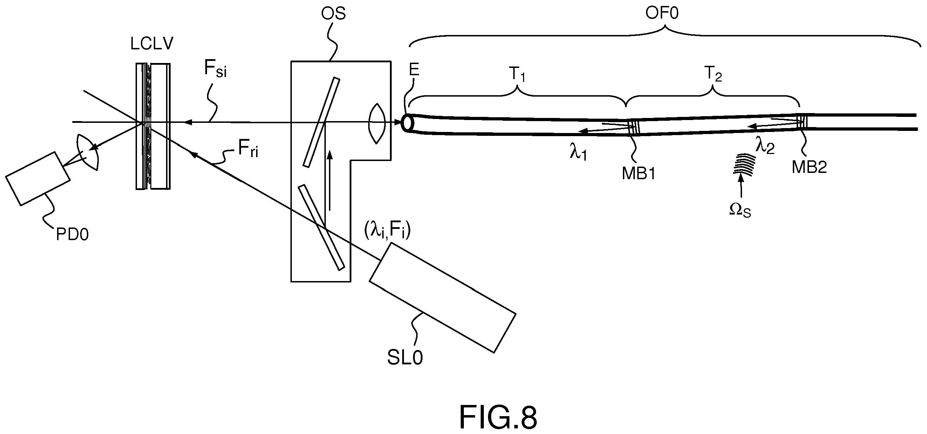

Selon un mode de réalisation illustré figure 4, l'ensemble laser comprend une pluralité de source laser SL1, SL2 ... SLi, SLN, émettant chacune une longueur d'onde d'émission λ1, λ2, λi, ...,λN, les laser émettant de manière simultanée. En variante, au moins un laser de la pluralité de laser émet plusieurs longueurs d'ondes.
Selon un autre mode de réalisation illustré figure 8, l'ensemble laser comprend un laser unique SL0 accordable en longueur d'onde et apte à émettre les longueurs d'ondes λ1, λ2, λi, ...,λN séquentiellement dans le temps. En variante l'ensemble comprend au moins deux lasers accordables, chaque laser accordable étant apte à émettre séquentiellement une pluralité de longueurs d'ondes.

Le capteur 100 comprend également un ensemble fibre optique OF comprenant N tronçons successifs Ti indicés i, chaque tronçon comprenant un dispositif de réflexion sélectif Mi apte à réfléchir une longueur d'onde d'émission associée λi, c'est-à-dire dont la réflexion est centrée sur la longueur d'onde λi. Les dispositifs de réflexion sont typiquement espacés d'une distance d. Chaque tronçon de longueur d correspond à une partie sensible du capteur.
Les indices i sont repérés par rapport à une extrémité E de l'ensemble fibre OF située du côté de l'ensemble laser: le tronçon T1 réfléchissant la longueur d'onde λ1 correspond au premier tronçon, soit le tronçon le plus proche de l'extrémité E, le tronçon TN réfléchissant la longueur d'onde λN correspond au dernier tronçon, soit le tronçon le plus éloigné de l'extrémité E.

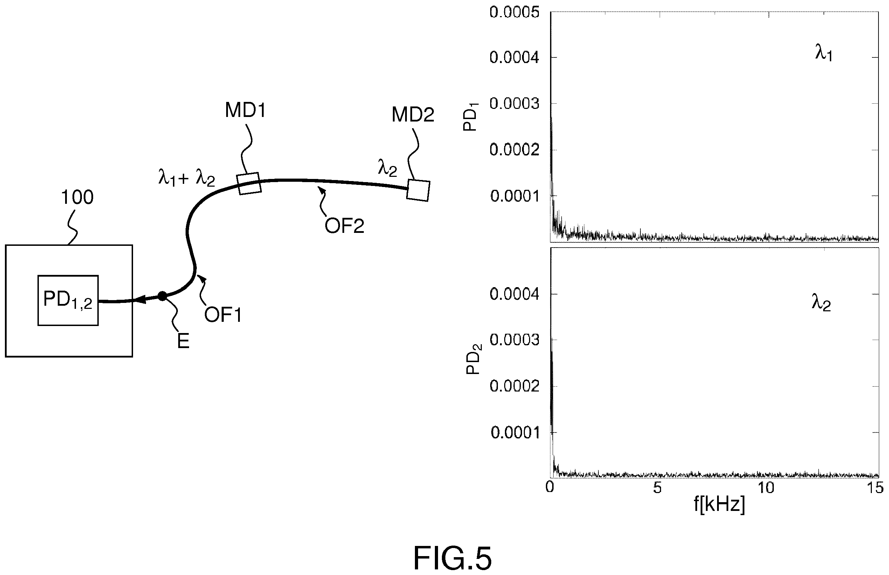

Selon un mode de réalisation illustré figure 5, chaque dispositif de réflexion Mi comprend un miroir dichroïque MDi. Préférentiellement dans ce cas, l'ensemble fibre optique comprend N fibres optiques OF1, OF2... OFN, chaque fibre OFi et le miroir dichroïque associé MDi correspondant à un tronçon Ti.

Selon un autre mode de réalisation illustré figure 8, chaque dispositif de réflexion Mi comprend un réflecteur de Bragg MBi. Préférentiellement dans ce cas, l'ensemble fibre optique OF est formé d'une fibre unique OF0, les réflecteurs de Bragg MBi étant intégrés dans la fibre OF0 à l'aide de moyens d'enregistrement connus de l'état de la technique.

Le capteur 100 selon l'invention comprend en outre un système optique OS configuré pour réaliser un ensemble de fonctions optiques.

Tout d'abord le système optique OS est configuré pour injecter par l'extrémité E de l'ensemble fibre optique OF les faisceaux laser Fi émis par l'ensemble laser SL, qui vont ensuite se propager dans la fibre. Le faisceau de longueur d'onde λ1 traverse le premier tronçon T1 et se réfléchit sur le dispositif de réflexion M1. Les autres faisceaux de longueur d'onde λ2,..., λi, ..., à traversent le deuxième tronçon T2. Le faisceau de longueur d'onde λ2 se réfléchit sur le dispositif de réflexion M2 et ainsi de suite jusqu'au dernier faisceau de longueur d'onde λN qui seul traverse le dernier tronçon TN et se réfléchit sur le dispositif de réflexion MN.

En outre le système optique OS est configuré pour recevoir par l'extrémité E les N faisceaux signal Fsi indicés i de longueurs d'onde λi en sortie de l'ensemble fibre optique OF. Chaque faisceau signal Fsi est issu de la réflexion sur le moyen de réflexion Mi associé à la longueur d'onde λi, du faisceau laser Fi de longueur d'onde λi injecté puis propagé dans les différents tronçons de l'ensemble fibre optique OF, comme décrit ci-dessus.
Le système optique OS est également configuré pour générer N faisceaux de référence Fri indicés i de longueurs d'onde λi, à partir du faisceau laser Fi de longueur d'onde d'émission λi.

Avec les faisceaux de références Fri et les faisceaux signal Fsi, le système optique OS est configuré pour réaliser N zones d'interférences Zi indicées i, chaque zone correspondant à l'interférence entre un faisceau de référence Fri et un faisceau signal Fsi de même longueur d'onde d'émission λi. Ainsi une zone d'interférence Zi correspond à l'interférence entre le faisceau référence Fri issu directement du laser d'une part, et le faisceau signal Fsi injecté, propagé dans l'ensemble fibre optique d'autre part, tous deux de longueur d'onde λi. L'interférence de Fri et Fsi donne naissance à un réseau de franges d'intensité dans la zone Zi.

Les N zones d'interférences Zi sont disjointes, ou adjacentes, ou partiellement en recouvrement, ou localisées dans un même endroit de l'espace.

Le capteur selon l'invention comprend également un détecteur holographique HD comprenant plusieurs éléments.

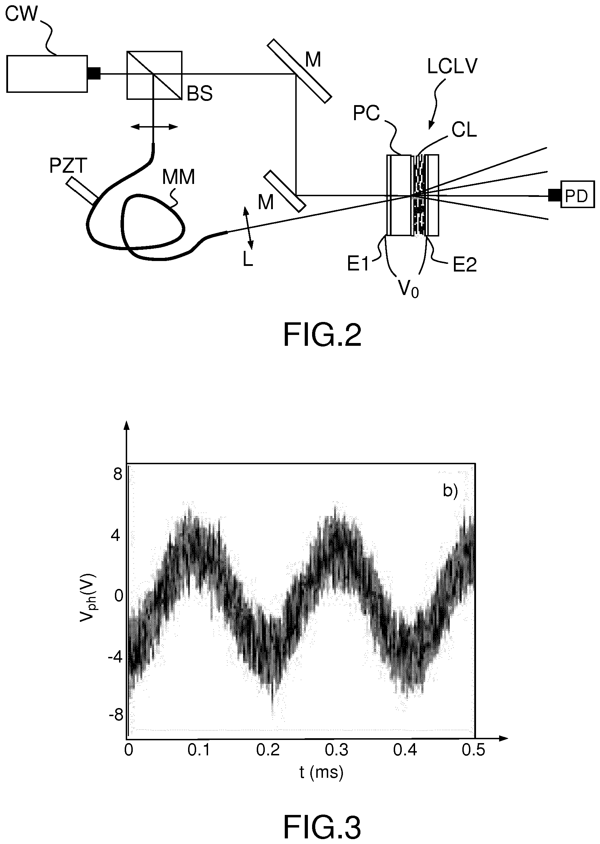

Un premier élément est une valve à cristal liquide LCLV (Liquid Crystal Light Valve en terminologie anglo-saxonne) connue dans l'état de la technique pour sa capacité à réaliser des hologrammes par transformation de la variation d'intensité d'une figure d'interférence en variation d'indice du cristal liquide, induisant ainsi une variation de phase optique.
Tel qu'illustré sur la figure 2, la LCLV comprend une fine couche de cristal liquide LC, typiquement d'épaisseur comprise entre 10 et 200 µm, disposée entre deux substrats, un des substrats comprenant un matériau photoconducteur PC apte à transformer la lumière provenant des N longueurs d'onde d'émission λi en charge.
Par exemple la couche de cristaux liquides est située entre un substrat de verre et un substrat consistant en un cristal photoconducteur, par exemple un cristal de BSO, sensible dans les longueurs d'onde bleu/vert. Des électrodes E1 et E2 sont déposées sur les substrats.

Nous allons à présent décrire le principe de fonctionnement d'une LCLV. Les cristaux liquides LC sont des molécules organiques anisotropes, caractérisées par une forte biréfringence. Pour les cristaux liquides nématiques, dans la phase nématique toutes les molécules de cristal liquide sont en moyenne alignées le long d'une direction préférentielle. Lorsqu'une tension est appliquée aux électrodes, à cause de l'anisotropie diélectrique du cristal liquide, un moment dipolaire est induit et les molécules se réorientent parallèlement au champ appliqué.
Le matériau photoconducteur est caractérisé par une grande différence de résistivité entre l'état « on » (c'est à dire éclairé) et l'état « off » (c'est-à-dire sans illumination). Lorsqu'un faisceau lumineux est envoyé sur la LCLV, des charges sont photogénérées à la surface du photoconducteur, la tension efficace sur les cristaux liquides augmente et les molécules se réorientent.

En raison de la biréfringence des cristaux liquides, le faisceau sortant acquiert un déphasage, qui est une fonction à la fois de la tension appliquée à la LCLV et de l'intensité sur le photoconducteur. L'indice de réfraction (i.e. le déphasage) peut donc être contrôlé localement par l'intensité lumineuse. Dans la partie linéaire de la réponse du déphasage en fonction de l'intensité, la LCLV se comporte comme un milieu non-linéaire de type Kerr, fournissant un changement d'indice de réfraction proportionnel à l'intensité d'entrée.
Les deux faisceaux par longueur d'onde λi, Fri et Fsi, interfèrent dans le plan du photoconducteur, donnant naissance à un réseau de franges d'intensité. Ce réseau d'illumination provoque l'orientation des molécules de cristal liquide, ce qui a pour conséquence la formation d'un réseau d'indice de réfraction dont l'amplitude est proportionnelle à l'intensité d'entrée par le biais du coefficient non linéaire n2. L'hologramme adaptatif se construit donc, pour chaque longueur d'onde λi, en faisant interférer le signal de speckle Fsi issu de l'ensemble fibre, portant l'information de phase à détecter, avec un faisceau de référence Fri.
La valve LCLV est disposée de sorte qu'elle recouvre au moins partiellement les zones d'interférences Zi.
Ainsi la valve est configurée pour réaliser dans la couche de cristal liquide LC N hologrammes dynamiques et adaptatifs Hi indicés i, un hologramme par longueur d'onde λi, à partir respectivement des zones d'interférence Zi.

Pour chaque longueur d'onde λi, l'hologramme Hi diffracte plusieurs faisceaux à partir de la diffraction des faisceaux d'inscription Fri et Fsi.
En effet ces deux faisceaux sont diffractés par le réseau d'indice qu'ils ont inscrit dans la couche de LC : on parle de mélange à deux ondes entre un faisceau pompe (la référence) et un faisceau signal.
Cette couche est mince (entre 10 et 200 µm typiquement), par conséquent la diffraction se produit dans le régime de Raman-Nath et plusieurs ordres de diffraction sont observés à la sortie de la LCLV. Une partie des photons pompe sont transférés sur les ordres diffractés et, en particulier, certains sont transférés dans la direction du signal, qui résulte donc amplifié. La détection se fait normalement sur la direction du signal ou la direction de la pompe, mais elle est possible aussi sur la direction des ordres de diffraction plus élevés, comme expliqué ci-dessous.

Le détecteur holographique HD du capteur 100 selon l'invention comprend également au moins un détecteur optique PD, typiquement une photodiode, configuré pour détecter N signaux optiques de sortie Fouti indicés i diffractés respectivement par les N hologrammes Hi. Les hologrammes Hi fonctionnant typiquement dans un régime de diffraction Raman-Nath, la détection peut s'opérer sur différents faisceaux diffractés.
Selon un mode de réalisation, le détecteur optique est disposé de manière à détecter, pour chaque longueur d'onde, le faisceau diffracté issu du faisceau signal Fsi (selon la même direction).
Selon un autre mode de réalisation, le détecteur optique est disposé de manière à détecter, pour chaque longueur d'onde, le faisceau diffracté issu du faisceau de référence ou pompe Fri (selon la même direction).
Selon un autre mode de réalisation, le détecteur optique est disposé de manière à détecter, pour chaque longueur d'onde, un faisceau diffracté d'ordre supérieur.

La capacité d'une LCLV à détecter par interférence une modulation de phase Δφ induite dans une fibre optique a été démontrée dans la publication « Adaptative Holography in Liquid Crystal Light- valves », journal materials 2012, 5, 1546-1559 (ISSN 1996-1944), selon l'expérience illustrée figure 2. Cette expérience a pour objectif de démontrer la capacité de l'hologramme dynamique réalisé par la LCLV à fonctionner avec des champs complexes spatialement et temporellement : la fibre multimode MM sert à créer des champs de « speckles » spatialement complexes, la modulation de phase induite via le miroir piézoélectrique sert à créer des champs temporellement complexes, pour une longueur d'onde unique issue du laser.
Tel qu'illustré figure 3, un détecteur PD disposé dans un faisceau diffracté détecte la modulation de phase induite dans la fibre MM par la présence d'une modulation temporelle de l'intensité du signal détecté, la conversion modulation de phase/ modulation d'intensité étant réalisée par la LCLV.

Le détecteur holographique HD du capteur 100 selon l'invention comprend en outre une unité de traitement UN adaptée pour identifier le tronçon de l'ensemble fibre OF situé à proximité de l'excitation à localiser.

Cette identification s'effectue à partir des N signaux optiques de sortie détectés. En effet chaque signal optique Fouti détecté porte une information sur la modulation de phase Δφ, qui se traduit par une éventuelle modulation temporelle de son intensité autour d'une fréquence égale à la fréquence centrale de la modulation de phase Δφ.
Cette information est détectée par le détecteur PD, puis traitée par l'unité de traitement UN pour identifier le tronçon le plus proche de l'excitation externe qui a induit la modulation de phase dans la fibre.

Selon un mode de réalisation, le traitement consiste à déterminer, parmi les N signaux optiques de sortie détectés (Fouti), le signal optique de sortie d'indice le plus faible k1 présentant la modulation de phase (c'est-à-dire une modulation d'intensité associée), le tronçon à identifier Tk1 correspondant au tronçon présentant l'indice k1.
En effet, si l'excitation se produit à proximité du tronçon T1 le plus proche de l'extrémité E, l'ensemble des signaux optiques Fouti pour toutes les longueurs d'onde λi, se sont propagés dans ce tronçon, et sont donc modulés. Le tronçon de plus faible indice est le tronçon 1 T1.
De manière plus générale, si l'excitation se produit à proximité du tronçon d'indice k1 Tk1, ce sont les faisceaux optiques d'indices supérieur ou égal à k1 qui se sont propagés dans le tronçon Tk1, les faisceaux optiques d'indice inférieur 1,...,k1-1, s'étant déjà réfléchis sur les dispositifs de réflexion correspondant M1,..., Mk1. Ainsi, le tronçon Tk1 est identifié.

Ainsi, l'ensemble fibre optique OF structuré en tronçons réalise un capteur distribué, le multiplexage en longueur d'onde permettant l'identification du tronçon localisé à proximité de l'excitation externe.

Le capteur 100 selon l'invention présente de nombreux avantages. Il est bas coût, discret et facilement déployable.

Un autre avantage est que le capteur 100 présente une très grande sensibilité. En effet une caractéristique importante de l'holographie adaptative est que pour les petites modulations de phase d'amplitude Δφ, la détection est toujours linéaire en Δφ donc la puissance mesurée sur chaque ordre de sortie est directement proportionnelle à l'amplitude de la modulation de phase, et une mesure directe de Δφ peut être réalisée en plaçant une photodiode sur l'un des ordres diffractés à la sortie de la LCLV.
Du fait du caractère linéaire de la détection, on peut mesurer des petits signaux, qui autrement seraient cachés par le bruit (par exemple si la détection est quadratique la pente de la courbe de mesure, qui donne la sensibilité, est sensiblement inférieure). De plus, la sensibilité est également augmentée du fait du grand déphasage produit par la valve optique en fonction des variations d'intensité, c'est-à-dire, la valve optique est caractérisée par un grand coefficient n2 équivalent induit par l'ensemble photoconducteur - cristaux liquides.

Un autre avantage est que les conditions optimales de détection sont automatiquement maintenues par le caractère adaptatif du réseau de diffraction qui est capable de suivre les variations de phase lentes et s'y adapter. Grâce à cette propriété, la détection de modulation de phase à haute fréquence est insensible aux bruits basse fréquence, contrairement aux interféromètres standards pour lesquels la linéarité doit être maintenue par des asservissements.
En effet, le processus de mélange d'ondes dans la LCLV est fortement sélectif en fréquence et se produit dans une bande passante très étroite.

Lorsque le réseau est capable de « suivre » la variation de phase, c'est-à-dire lorsque cette fluctuation varie sur une constante de temps supérieure au temps de réponse du cristal liquide, l'hologramme s'adapte aux changements de phase à basse fréquence et l'intensité diffractée est inchangée : les fluctuations à basse fréquence n'ont pas d'effets sur l'intensité diffractée par la LCLV et la photodiode détecte un signal d'intensité constante.

Lorsque la fluctuation évolue sur une constante de temps inférieure au temps de réponse du cristal liquide (typiquement des fréquences supérieures à 10 à 100 Hz), la modulation de phase de l'onde optique se retrouve sous la forme d'une modulation temporelle de l'intensité diffractée par la LCLV. Pour les hautes fréquences la valve LCLV se comporte comme un hologramme statique qui transforme les variations de phase en variations d'intensité sur l'onde diffractée; et ces variations de phase sont directement mesurées par la photodiode ; De plus, par la nature même de l'hologramme adaptatif, la variation d'intensité est linéaire tant que le déphasage est petit.

La petite bande-passante (inverse du temps de réponse de la valve) permet la détection de modulations de phase à haute fréquence (acoustique) et filtre les basses fréquences comprises dans la bande du mélange à deux ondes (typiquement inférieures à 10 à 100 Hz) telles que les fluctuations de température , de pression statique, certaines vibrations.
La capacité de l'hologramme adaptatif enregistré dans la LCLV à suivre et compenser le bruit à basse fréquence permet de réaliser un capteur de modulation de phase qui reste très efficace même dans des conditions environnementales bruitées et pour des faisceaux complexes, comme des champs de « speckle » issus d'une fibre optique.

La figure 4 illustre un capteur 100 selon l'invention fonctionnant avec N =3, soit trois longueurs d'onde λ1, λ2, λ3 selon un premier mode de réalisation dénommé « parallèle », dans lequel les trois longueurs d'onde sont émises simultanément par trois sources lasers SL1, SL2, SL3. Préférentiellement pour ce mode de réalisation, le capteur comprend N détecteurs optiques indicés i PD1, PD2,... PDN, ici PD1, PD2, PD3, chaque détecteur étant adapté pour détecter respectivement un signal optique de sortie de longueur d'onde d'émission λi, ici λ1, λ2, λ3, la détection s'opérant de manière simultanée pour tous les détecteurs.
L'ensemble fibre comprend dans cet exemple une pluralité de fibres optiques, chaque tronçon Ti , ici T1, T2, et T3, comprenant une fibre et un dispositif de réflexion comprenant un miroir dichroïque MDi, ici MD1, MD2 et MD3.

A titre d'exemple non limitatif, un capteur selon l'invention est décrit ci-après en reprenant le schéma de la figure 5 pour N=2.
Il comprend deux tronçons T1, T2 de fibre multimode OF1, OF2, présentant un diamètre du coeur de 200 microns, une ouverture numérique de 0.22 et une longueur de 5m.

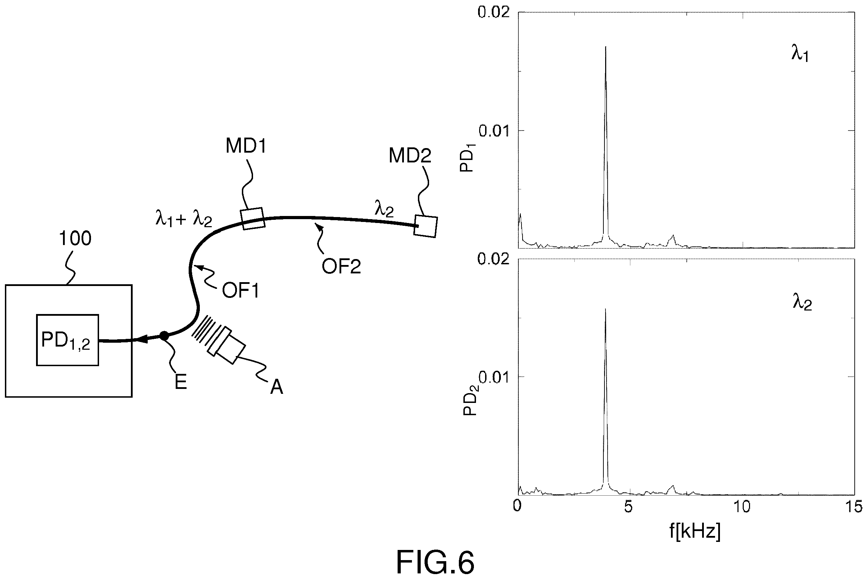

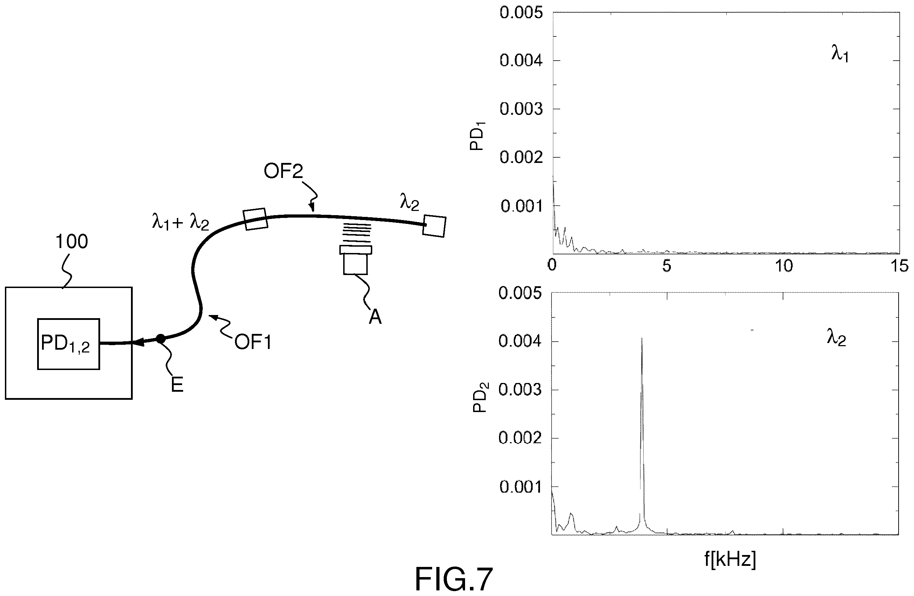

La valve optique est réalisée avec un substrat photoconducteur de BSO, photo-sensible dans la région bleu-vert du spectre visible. L'épaisseur du cristal liquide LC à l'intérieur de la valve est de 14 microns.
Le protocole de localisation de la perturbation utilise deux longueurs d'ondes : λ1= 515 nm et λ2= 553 nm. Ces longueurs d'onde sont générées par un ensemble laser comprenant un laser unique émettant simultanément les deux longueurs d'onde. Le système optique OS intègre un miroir dichroïque utilisé à la sortie du laser pour séparer les deux longueurs d'onde au départ.
Les intensités des signaux de référence sont approximativement égales, Ir1, Ir2 ≈ 0.8 mW/cm2, ainsi que les intensités des deux faisceaux signal en sortie de fibre Is1, Is2 ≈ 0.7 mW/cm2.
Le protocole de localisation des ondes acoustiques mesure une modulation de phase induite par un piézoélectrique placé à proximité des tronçons de fibres.
Un exemple de détection réalisée sur les photodiodes PD1 (λ1) et PD2 (λ2) est illustré sur les figures 5 à 7.
Sur la partie à gauche des figures on voit la position de l'excitation acoustique A par rapport aux fibres OF1 et OF2. Sur la partie à droite sont montrés les spectres de Fourier de chaque signal enregistré par les deux photodiodes, PD1 et PD2. Dans cet exemple de capteur, l'unité de traitement UN est apte à calculer la transformée de Fourier de l'intensité modulée temporellement détectée par les photodiodes.
En l'absence de perturbation, aucun signal n'est enregistré (figure 5).
Si une perturbation est présente à proximité de la première fibre OF1, les deux photodiodes PD1 et PD2 relèvent un signal (figure 6), le tronçon le plus proche de l'excitation A correspond au tronçon T1, 1 étant l'indice le plus faible.
Si la perturbation ne concerne que la deuxième fibre OF2, le signal est détecté par la seule photodiode PD2 détectant le signal à λ2 (figure 7). Le tronçon le plus proche de l'excitation A correspond au tronçon T2. En effet lorsqu'un seul signal modulé est détecté, il s'agit nécessairement du signal correspondant à la longueur d'onde λN du tronçon TN le plus éloigné de l'extrémité E.

La figure 8 illustre un capteur 100 selon l'invention fonctionnant avec N longueurs d'onde selon un deuxième mode de réalisation dénommé « série», dans lequel les N longueurs d'onde sont émises séquentiellement par une source laser SL0. Préférentiellement pour ce mode de réalisation, le capteur comprend un détecteur optique unique PD0, adapté pour détecter séquentiellement les signaux optiques de sortie Fouti de longueur d'onde d'émission λi.
Dans cet exemple, l'ensemble fibre optique est formé d'une fibre unique OF0, et chaque dispositif de réflexion Mi comprend un réflecteur de Bragg MBi intégré dans la fibre OF0. Le système optique est simplifié.

Le capteur selon l'invention ne se limite pas à l'utilisation de longueurs d'onde du spectre visible, il peut être réalisé à d'autres longueurs d'onde, par exemple dans le proche Infra Rouge ou l'IR, afin de pouvoir utiliser des composants issus du domaine télécom. Pour ce domaine spectral le cristal BSO doit être remplacé par un cristal photoconducteur dans l'IR ayant les caractéristiques requises en termes d'efficacité quantique de photoconduction, de résistivité dans le noir, et de qualité optique. Les photoconducteurs possibles sont par exemple Si, GaAs, InP, GaP, CdS, CdTe, ZnTe ...

Selon une variante préférée, l'ensemble fibre OF est réalisé à partir d'une ou d'une pluralité de fibres multimodes. De façon générale, les fibres multimodes sont plus faciles à utiliser (alignement et couplages plus faciles), moins fragiles, moins chères, et présentent des effets non-linéaires moindres que les fibres monomodes. Elles sont également plus sensibles aux variations de longueur, notamment grâce aux couplages des multiples modes lors de la propagation. Le déphasage induit par l'onde acoustique, l'est sur chacun des modes. S'il y a M modes dans la fibre, l'onde optique porte M fois le déphasage. Le gain en sensibilité aux variations de longueur est égal au nombre de modes se propageant dans la fibre. La partie sensible peut ainsi être simplifiée, en s'affranchissant du transducteur.
Un ensemble fibre optique multimode est compatible avec une LCLV, qui diffracte tous les modes qui interfèrent, et donc le déphasage est amplifié d'un facteur M.

Les fibres multimodes ne sont pas utilisées dans un interféromètre standard car ceux-ci fonctionnent en interférence à deux ondes. Si on fait interférer M modes avec eux-mêmes, on ne peut pas corriger les variations lentes de phase de la fibre pour tous les modes en même temps, et donc on a un très mauvais contraste.

D'autre part, le bruit provenant des instabilités de polarisation diminue drastiquement lorsque le nombre de modes dans la fibre augmente. Le choix d'une fibre multimode avec un diamètre assez large (> 100µm) permet donc de minimiser ce bruit.

En variante, l'ensemble fibre, classiquement revêtu d'une gaine en epoxy, est revêtu d'une gaine en polyimide pour mieux l'isoler des fluctuations thermiques et augmenter sa sensibilité en élongation pour une contrainte donnée.

Selon une variante, l'ensemble fibre est monomode.
Préférentiellement l'ensemble fibre monomode est à maintien de polarisation, ce qui maximise le contraste des interférences.

Un exemple d'utilisation du capteur 100 selon l'invention est un capteur sous marin d'onde acoustique, l'ensemble fibre optique étant dans ce cas immergé et l'excitation à détecter et à localiser étant constituée d'une onde acoustique sous marine.

## Revendications

1. Capteur (100) à fibre optique pour localiser une excitation à proximité d'un ensemble fibre optique, ladite excitation induisant une modulation de la phase d'un signal optique se propageant dans ledit ensemble fibre optique, ledit capteur comprenant :
- un ensemble laser (SL) d'au moins un laser, ledit ensemble laser étant configuré pour émettre N faisceaux lasers (Fi) indicés i avec N > 1, de longueur d'onde d'émission respective λi,
- un ensemble fibre optique (OF) comprenant N tronçons successifs (Ti) indicés i, chaque tronçon comprenant un dispositif de réflexion sélectif (Mi) d'une longueur d'onde d'émission associée λi, les indices étant repérés par rapport à une extrémité (E) dudit ensemble fibre,
- un système optique (OS) configuré pour :
* injecter par ladite extrémité (E) lesdits faisceaux laser (Fi)
* recevoir par ladite extrémité (E) N faisceaux signal (Fsi) indicés i respectivement de longueurs d'onde λi, chaque faisceau signal (Fsi) étant issu de la réflexion, sur le dispositif de réflexion (Mi) associé à la longueur d'onde λi, du faisceau laser (Fi) de longueur d'onde λi injecté puis se propageant dans ledit ensemble fibre,
*générer N faisceaux de référence (Fri) indicés i respectivement de longueurs d'onde λi, à partir du faisceau laser (Fi) de longueur d'onde d'émission λi,
*réaliser N zones d'interférences (Zi) indicées i, chaque zone correspondant à l'interférence entre un faisceau de référence (Fri) et un faisceau signal (Fsi) de même longueur d'onde d'émission λi, le capteur étant **caractérisé en ce qu'**il comporte un détecteur holographique (HD) comprenant :
- une valve optique à cristal liquide (LCLV) comprenant une couche de cristal liquide disposée entre deux substrats, un des substrats comprenant un matériau photoconducteur pour lesdites N longueurs d'onde d'émission (λi), ladite valve (LCLV) étant disposée de sorte qu'elle recouvre au moins partiellement lesdites zones d'interférences (Zi), ladite valve étant configurée pour réaliser N hologrammes (Hi) indicés i à partir respectivement desdites N zones d'interférence (Zi),
- au moins un détecteur optique (PD) configuré pour détecter N signaux optiques de sortie (Fouti) indicés i diffractés respectivement par lesdits N hologrammes,
- une unité de traitement (UN) adaptée pour identifier le tronçon dudit ensemble fibre situé à proximité de ladite excitation à localiser, à partir des N signaux optiques de sortie (Fouti) détectés.

2. Capteur selon la revendication 1 dans lequel ladite unité de traitement (UN) est adaptée pour identifier ledit tronçon en déterminant, parmi les N signaux optiques de sortie (Fouti) détectés, le signal optique de sortie (Foutk1) d'indice le plus faible (k1) présentant ladite modulation de phase, ledit tronçon à identifier (Tk1) correspondant au tronçon présentant ledit indice le plus faible (k1).

3. Capteur selon les revendications 1 ou 2 dans lequel ladite modulation de phase dudit signal optique de sortie correspond à une modulation temporelle d'une intensité dudit signal optique de sortie détectée.

4. Capteur selon l'une des revendications précédentes dans lequel le dispositif de réflexion (Mi) comprend un miroir dichroïque (MDi) et ledit ensemble fibre optique (OF) comprend N fibres optiques (OFi), chaque fibre et le miroir dichroïque associé correspondant à un tronçon (Ti).

5. Capteur selon l'une des revendications 1 à 3 dans lequel ledit ensemble fibre optique (OF) est formé d'une fibre unique (OF0) et chaque dispositif de réflexion (Mi) comprend un réflecteur de Bragg (MBi) intégré dans ladite fibre (OF0).

6. Capteur selon l'une des revendications précédentes dans lequel ledit ensemble laser (SL) consiste en un laser unique (SL0) émettant séquentiellement lesdites longueurs d'onde d'émission (λ1, λ2,...λN).

7. Capteur selon l'une des revendications 1 à 5 dans lequel ledit ensemble laser (SL) comprend une pluralité de N lasers (L1, L2, ... LN), chaque laser émettant respectivement une longueur d'onde d'émission (λ1, λ2,...λN).

8. Capteur selon l'une des revendications précédentes comprenant N détecteurs optiques indicés i (PD1, PD2,... PDN), chaque détecteur étant adapté pour détecter respectivement un signal optique de sortie (Fouti) de longueur d'onde d'émission λi, la détection s'opérant de manière simultanée pour tous les détecteurs.

9. Capteur selon l'une des revendications 1 à 7 comprenant un détecteur optique unique (PD0) adapté pour détecter séquentiellement lesdits signaux optiques de sortie (Fouti).

10. Capteur selon l'une des revendications précédentes dans lequel ledit ensemble fibre optique (OF) est multimode.

11. Capteur selon l'une des revendications 1 à 9 dans lequel ledit ensemble fibre optique (OF) est monomode et à maintien de polarisation.

12. Capteur selon l'une des revendications précédentes dans lequel ledit ensemble fibre optique (OF) est immergé et ladite excitation à localiser est une onde acoustique sous marine.

13. Procédé de localisation d'une excitation à proximité d'un ensemble fibre optique, ladite excitation induisant une modulation de la phase d'un signal optique se propageant dans ledit ensemble fibre optique, comprenant les étapes consistant à :
- émettre N faisceaux lasers (Fi) indicés i avec N >1, de longueur d'onde d'émission respective λi,
- injecter lesdits N faisceaux lasers dans un ensemble fibre optique (OF), par une extrémité (E) dudit ensemble, ledit ensemble fibre optique comprenant N tronçons successifs (Ti), indicés i chaque tronçon comprenant un dispositif de réflexion sélectif (Mi) d'une longueur d'onde d'émission associée λi, les indices étant repérés par rapport à ladite extrémité (E) de ladite fibre,
- recevoir par ladite extrémité (E) N faisceaux signal (Fsi) indicés i respectivement de longueurs d'onde λi, chaque faisceau signal (Fsi) étant issu de la réflexion, sur le moyen de réflexion (Mi) associé à la longueur d'onde λi, du faisceau laser (Fi) de longueur d'onde λi injecté puis se propageant dans ledit ensemble fibre,
- générer N faisceaux de référence (Fri) indicé i respectivement de longueurs d'onde λi, à partir du faisceau laser (Fi) de longueur d'onde d'émission λi,
- réaliser N zones d'interférences (Zi) indicées i, chaque zone correspondant à l'interférence entre un faisceau de référence (Fri) et un faisceau signal (Fsi) de même longueur d'onde d'émission λi,
la méthode étant **caractérisée par** les étapes supplémentaires :
- réaliser N hologrammes (Hi) indicés i à partir desdites N zones d'interférence (Zi) avec une valve optique à cristal liquide (LCLV) comprenant une couche de cristal liquide disposée entre deux substrats, un des substrats comprenant un matériau photoconducteur pour lesdites N longueurs d'onde d'émission (λi), ladite valve (LCLV) étant disposée de sorte qu'elle recouvre au moins partiellement lesdites zones d'interférences,
- détecter N signaux optiques de sortie (Fouti) indicés i diffractés respectivement par lesdits N hologrammes,
- identifier le tronçon (Tk1) dudit ensemble fibre optique (OF) situé à proximité de ladite excitation à localiser, à partir desdits N signaux optiques de sortie (Fouti) détectés.

14. Procédé selon la revendication 13 dans lequel l'étape d'identification comprend une étape consistant à déterminer, parmi les N signaux optiques de sortie (Fouti) détectés, le signal optique de sortie (Foutk1) d'indice le plus faible (k1) présentant ladite modulation de phase, ledit tronçon à identifier (Tk1) correspondant au tronçon présentant ledit indice le plus faible (k1).

15. Procédé selon la revendication 14 dans lequel l'étape de détermination du signal optique de sortie (Foutk1) d'indice le plus faible (k1) présentant ladite modulation de phase comprend une étape consistant à analyser, pour les N signaux optiques de sortie (Fouti), respectivement une modulation temporelle de l'intensité détectée.

## Patentansprüche

1. Lichtwellenleitersensor (100) zum Lokalisieren einer Erregung in der Nähe einer Lichtwellenleiterbaugruppe, wobei die Erregung eine Modulation der Phase eines optischen Signals veranlasst, das sich in der Lichtwellenleiterbaugruppe ausbreitet, wobei der Sensor umfasst:
- eine Laserbaugruppe (SL) mindestens eines Lasers, wobei die Laserbaugruppe konfiguriert wird, um N mit i indizierte Laserstrahlen (Fi) der jeweiligen Emissionswellenlänge λi zu emittieren, wobei N > 1 ist,
- eine Lichtwellenleiterbaugruppe (OF), die N aufeinanderfolgende, mit i indizierte Abschnitte (Ti) umfasst, wobei jeder Abschnitt eine Vorrichtung trennscharfer Reflexion (Mi) einer λi zugehörigen Emissionswellenlänge umfasst, wobei die Indizes bezüglich eines Endpunkts (E) der Wellenleiterbaugruppe gekennzeichnet werden,
- ein optisches System (OS), das konfiguriert wird für ein:
Einkoppeln der Laserstrahlen (Fi) durch den Endpunkt (E)
Empfangen von N jeweils mit i indizierten Signalstrahlen (Fsi) der Wellenlängen λi durch den Endpunkt (E), wobei jeder Signalstrahl (Fsi), der auf der der Wellenlänge λi zugehörigen Reflexionsvorrichtung (Mi) von der Reflexion des eingekoppelten Laserstrahls (Fi) der Wellenlänge λi abgeleitet wird, sich dann in der Wellenleiterbaugruppe ausbreitet,
Erzeugen von N jeweils mit i indizierten Referenzstrahlen (Fri) der Wellenlänge λi von dem Laserstrahl (Fi) der Emissionswellenlänge λi,
Ausführen von N mit i indizierten Interferenzbereichen (Zi), wobei jeder Bereich der Interferenz zwischen einem Referenzstrahl (Fri) und einem Signalstrahl (Fsi) derselben Emissionswellenlänge λi entspricht,
wobei der Sensor **dadurch gekennzeichnet** wird, dass er einen holographischen Detektor (HD) aufweist, umfassend:
- ein optisches Flüssigkristallventil (LCLV), das eine zwischen zwei Trägermaterialien angeordnete Flüssigkristallschicht umfasst, wobei eines der Trägermaterialien ein photoleitfähiges Material für die N Emissionswellenlängen (λi) umfasst, wobei das Ventil (LCLV) derart angeordnet wird, dass es mindestens teilweise die Interferenzbereiche (Zi) bedeckt, wobei das Ventil konfiguriert wird, um N mit i indizierte Hologramme (Hi) von den jeweils N Interferenzbereichen (Zi) auszuführen,
- mindestens einen optischen Detektor (PD), der konfiguriert wird, um N mit i indizierte, jeweils durch die N Hologramme gebeugten optischen Ausgangssignale (Fouti) zu erkennen,
- eine Verarbeitungseinheit (UN), die angepasst wird, um den in der Nähe der zu lokalisierenden Erregung angeordneten Abschnitt der Wellenleiterbaugruppe von den N erkannten optischen Ausgangssignalen (Fouti) zu identifizieren.

2. Sensor nach Anspruch 1, in dem die Verarbeitungseinheit (UN) angepasst wird, um den Abschnitt durch Bestimmen aus den N erkannten optischen Ausgangssignalen (Fouti) zu identifizieren, wobei das optische Ausgangssignal (Foutk1) den kleinsten Index (k1) der Phasenmodulation aufweist, wobei der zu identifizierende Abschnitt (Tk1) dem Abschnitt entspricht, der den kleinsten Index (k1) aufweist.

3. Sensor nach den Ansprüchen 1 oder 2, in dem die Phasenmodulation des optischen Ausgangssignals einer zeitlichen Modulation einer Intensität des erkannten optischen Ausgangssignals entspricht.

4. Sensor nach einem der vorhergehenden Ansprüche, in dem die Reflexionsvorrichtung (Mi) einen dichroitischen Spiegel (MDi) umfasst und die Lichtwellenleiterbaugruppe (OF) N Lichtwellenleiter (OFi) umfasst, wobei jeder Wellenleiter und der zugehörige dichroitische Spiegel einem Abschnitt (Ti) entsprechen.

5. Sensor nach einem der Ansprüche 1 bis 3, in dem die Lichtwellenleiterbaugruppe (OF) aus einem einzelnen Wellenleiter (OF0) gebildet wird und jede Reflexionsvorrichtung (Mi) einen in den Wellenleiter (OF0) integrierten Bragg-Reflektor (MBi) umfasst.

6. Sensor nach einem der vorhergehenden Ansprüche, in dem die Laserbaugruppe (SL) aus einem einzelnen Laser (SL0) besteht, der die Emissionswellenlängen (λ1, λ2,... λN) aufeinanderfolgend emittiert.

7. Sensor nach einem der Ansprüche 1 bis 5, in dem die Laserbaugruppe (SL) eine Vielzahl von N Lasern (L1, L2, ... LN) umfasst, wobei jeder Laser jeweils eine Emissionswellenlänge (λ1, λ2,... λN) emittiert.

8. Sensor nach einem der vorhergehenden Ansprüche, der N mit i indizierte optische Detektoren (PD1, PD2,... PDN) umfasst, wobei jeder Detektor angepasst wird, um jeweils ein optisches Ausgangssignal (Fouti) der Emissionswellenlänge λi zu erkennen, wobei die Erfassung sich für alle Detektoren auf eine gleichzeitige Weise vollzieht.

9. Sensor nach einem der Ansprüche 1 bis 7, der einen einzelnen optischen Detektor (PD0) umfasst, der angepasst wird, um die optischen Ausgangssignale (Fouti) aufeinanderfolgend zu erkennen.

10. Sensor nach einem der vorhergehenden Ansprüche, in dem die Lichtwellenleiterbaugruppe (OF) im Multimodebetrieb ist.

11. Sensor nach einem der Ansprüche 1 bis 9, in dem die Lichtwellenleiterbaugruppe (OF) im Monomodebetrieb und mit Polarisationsbeibehaltung ist.

12. Sensor nach einem der vorhergehenden Ansprüche, in dem die Lichtwellenleiterbaugruppe (OF) eingetaucht wird und die zu lokalisierende Erregung eine Unterwasserschallwelle ist.

13. Verfahren zur Ortung einer Erregung in der Nähe einer Lichtwellenleiterbaugruppe, wobei die Erregung eine Phasenmodulation eines optischen Signals veranlasst, das sich in der Lichtwellenleiterbaugruppe ausbreitet, umfassend die Schritte bestehend aus:
- Emittieren von N mit i indizierten Laserstrahlen (Fi) der jeweiligen Emissionswellenlänge λi, wobei N > 1 ist,
- Einkoppeln der N Laserstrahlen durch einen Endpunkt (E) der Baugruppe in eine Lichtwellenleiterbaugruppe (OF), wobei die Lichtwellenleiterbaugruppe N aufeinanderfolgende, mit i indizierte Abschnitte (Ti) umfasst, wobei jeder Abschnitt eine Vorrichtung trennscharfer Reflexion (Mi) einer zugehörigen Emissionswellenlänge λi umfasst, wobei die Indizes bezüglich des Endpunkts (E) des Wellenleiters gekennzeichnet werden,
- Empfangen von N jeweils mit i indizierten Signalstrahlen (Fsi) der Wellenlängen λi durch den Endpunkt (E), wobei jeder Signalstrahl (Fsi), der auf dem der Wellenlänge λi zugehörigen Reflexionsmittel (Mi) von der Reflexion des eingekoppelten Laserstrahls (Fi) der Wellenlänge λi abgeleitet wird, sich dann in der Wellenleiterbaugruppe ausbreitet,
- Erzeugen von N jeweils mit i indizierten Referenzstrahlen (Fri) der Wellenlänge λi von dem Laserstrahl (Fi) der Emissionswellenlänge λi,
- Ausführen von N mit i indizierten Interferenzbereichen (Zi), wobei jeder Bereich der Interferenz zwischen einem Referenzstrahl (Fri) und einem Signalstrahl (Fsi) derselben Emissionswellenlänge λi entspricht,
wobei das Verfahren durch die zusätzlichen Schritte gekennzeichnet wird:
- Ausführen von N mit i indizierten Hologrammen (Hi) anhand der N Interferenzbereiche (Zi) mit einem optischen Flüssigkristallventil (LCLV), das eine zwischen zwei Trägermaterialien angeordnete Flüssigkristallschicht umfasst, wobei eines der Trägermaterialien ein für die N Emissionswellenlängen (λi) photoleitfähiges Material umfasst, wobei das Ventil (LCLV) derart angeordnet wird, dass es mindestens teilweise die Interferenzbereiche bedeckt,
- Erkennen von N mit i indizierten optischen Ausgangssignalen (Fouti), die jeweils durch die N Hologramme gebeugt werden,
- Identifizieren des Abschnitts (Tk1) der Lichtwellenleiterbaugruppe (OF), der anhand N erkannter optischer Ausgangssignale (Fouti) angeordnet wird.

14. Verfahren nach Anspruch 13, in dem der Identifizierungsschritt einen Schritt umfasst, der darin besteht, aus den N erkannten optischen Ausgangssignalen (Fouti) das optische Ausgangssignal (Foutk1) des kleinsten Indexes (k1) zu bestimmen, das die Phasenmodulation darstellt, wobei der zu identifizierende Abschnitt (Tk1) dem Abschnitt entspricht, der den kleinsten Index (k1) aufweist.

15. Verfahren nach Anspruch 14, in dem der Bestimmungsschritt des optischen Ausgangssignals (Foutk1) des kleinsten Indexes (k1), der die Phasenmodulation aufweist, einen Schritt umfasst, der daraus besteht, für die N optischen Ausgangssignale (Fouti) jeweils eine zeitliche Modulation der erkannten Intensität zu analysieren.

## Claims

1. An optical fibre sensor (100) for locating an excitation in the vicinity of an optical fibre assembly, said excitation inducing a modulation of the phase of an optical signal propagating in said optical fibre assembly, said sensor comprising:
- a laser assembly (SL) of at least one laser, said laser assembly being configured to emit N laser beams (Fi) indexed i, with N > 1, with a respective emission wavelength λi;
- an optical fibre assembly (OF) comprising N successive sections (Ti) indexed i, each section comprising a selective reflection device (Mi) of an associated emission wavelength λi, the indices being referenced relative to an end (E) of said fibre assembly;
an optical system (OS) configured to:
inject said laser beams (Fi) via said end (E);
receive N signal beams (Fsi) indexed i, respectively with wavelengths λi, via said end (E), each signal beam (Fsi) coming from the reflection, on the reflection device (Mi) associated with the wavelength λi, of the injected laser beam (Fi) of wavelength λi, then propagating in said fibre assembly;
generate N reference beams (Fri) indexed i, respectively with wavelengths λi, from the laser beam (Fi) of emission wavelength Ai;
produce N interference zones (Zi) indexed i, each zone corresponding to the interference between a reference beam (Fri) and a signal beam (Fsi) of the same emission wavelength λi,
the sensor being **characterised in that** it comprises a holographic detector (HD) comprising:
- a liquid crystal optical valve (LCLV) comprising a liquid crystal layer disposed between two substrates, one of the substrates comprising a photoconductive material for said N emission wavelengths (λi), said valve (LCLV) being disposed so that it at least partially covers said interference zones (Zi), said valve being configured to produce N holograms (Hi) indexed i, respectively from said N interference zones (Zi);
- at least one optical detector (PD) configured to detect N output optical signals (Fouti) indexed i, respectively diffracted by said N holograms;
- a processing unit (UN) adapted to identify the section of said fibre assembly that is located in the vicinity of said excitation to be located from the N detected output optical signals (Fouti).

2. The sensor according to claim 1, wherein said processing unit (UN) is adapted to identify said section by determining, from the N detected output optical signals (Fouti), the output optical signal (Foutk1) with the smallest index (k1) having said phase modulation, said section (Tk1) to be identified corresponding to the section having said smallest index (k1).

3. The sensor according to any one of claims 1 to 2, wherein said phase modulation of said output optical signal corresponds to a temporal modulation of an intensity of said detected output optical signal.

4. The sensor according to any one of the preceding claims, wherein the reflection device (Mi) comprises a dichroic mirror (MDi) and said optical fibre assembly (OF) comprises N optical fibres (OFi), each fibre and the associated dichroic mirror corresponding to a section (Ti).

5. The sensor according to any one of claims 1 to 3, wherein said optical fibre assembly (OF) is formed from a single fibre (OF0) and each reflection device (Mi) comprises a Bragg reflector (MBi) integrated in said fibre (OF0).

6. The sensor according to any one of the preceding claims, wherein said laser assembly (SL) comprises a single laser (SL0) sequentially emitting said emission wavelengths (*λ*1*, λ*2*,* ...*λN*).

7. The sensor according to any one of claims 1 to 5, wherein said laser assembly (SL) comprises a plurality of N lasers (L1, L2, ... LN), each laser respectively emitting an emission wavelength (*λ*1, ..*λ*2, *...*1*N*).

8. The sensor according to any one of the preceding claims, comprising N optical detectors (PD1, PD2, ... PDN) indexed i, each detector being adapted to respectively detect an output optical signal (Fouti) of emission wavelength *λi*, the detection occurring simultaneously for all the detectors.

9. The sensor according to any one of claims 1 to 7, comprising a single optical detector (PD0) adapted to sequentially detect said output optical signals (Fouti).

10. The sensor according to any one of the preceding claims, wherein said optical fibre assembly (OF) is multi-mode.

11. The sensor according to any one of claims 1 to 9, wherein said optical fibre assembly (OF) is mono-mode and polarisation-maintaining.

12. The sensor according to any one of the preceding claims, wherein said optical fibre assembly (OF) is submerged and said excitation to be located is an underwater acoustic wave.

13. A method for locating an excitation in the vicinity of an optical fibre assembly, said excitation inducing a modulation of the phase of an optical signal propagating in said optical fibre assembly, comprising the following steps:
- emitting N laser beams (Fi) indexed i, with N > 1, with a respective emission wavelength *λi*;
- injecting said N laser beams into an optical fibre assembly (OF) via an end (E) of said assembly, said optical fibre assembly comprising N successive sections (Ti) indexed i, each section comprising a selective reflection device (Mi) of an associated emission wavelength λi, the indices being referenced relative to said end (E) of said fibre;
- receiving N signal beams (Fsi) indexed i, respectively with wavelengths λi, via said end (E), each signal beam (Fsi) coming from the reflection, on the reflection means (Mi) associated with the wavelength λi, of the injected laser beam (Fi) of wavelength λi, then propagating in said fibre assembly;
- generating N reference beams (Fri) indexed i, respectively with wavelengths λi, from the laser beam (Fi) of emission wavelength λi;
- producing N interference zones (Zi) indexed i, each zone corresponding to the interference between a reference beam (Fri) and a signal beam (Fsi) with the same emission wavelength λi,
the method being **characterised by** the following additional steps:
- producing N holograms (Hi) indexed i from said N interference zones (Zi) using a liquid crystal optical valve (LCLV) comprising a liquid crystal layer disposed between two substrates, one of the substrates comprising a photoconductive material for said N emission wavelengths (λi), said valve (LCLV) being disposed so that it at least partially covers said interference zones;
- detecting N output optical signals (Fouti) indexed i, respectively diffracted by said N holograms;
- identifying the section (Tk1) of said optical fibre assembly (OF) located in the vicinity of said excitation to be located from said N detected output optical signals (Fouti).

14. The method according to claim 13, wherein the identification step comprises a step of determining, from the N detected output optical signals (Fouti), the output optical signal (Foutk1) with the smallest index (k1) having said phase modulation, said section (Tk1) to be identified corresponding to the section having said smallest index (k1).

15. The method according to claim 14, wherein the step of determining the output optical signal (Foutk1) with the smallest index (k1) having said phase modulation comprises a step of respectively analysing, for the N detected output optical signals (Fouti), a temporal modulation of the detected intensity.
